# EUROPEAN PATENT APPLICATION

(11) **EP 1 059 120 A1**
(43) Date of publication of application: **13.12.2000**
(21) Application number: 99304401.5
(22) Date of filing: 07.06.1999
(51) Int. Cl.: B01L 3/02

(54) **Liquid sampling/dispensing**

(71) Applicant: Mettler-Toledo Myriad Ltd., Melbourn, Royston, Herts SG8 6DN (GB)
(72) Inventor: Mullin, Patrick, London SW12 0AW (GB)
(74) Representative: Haley, Stephen

(57) **Abstract**

An apparatus for sampling and dispensing a liquid. The apparatus comprises a liquid receiving region (2) having a liquid receiving orifice (3), and a pump (4) for controlling the gas pressure in the receiving region such that liquid can be drawn into the receiving region and dispensed from the receiving region via the orifice in the receiving region. There is also means for controlling the pump (4) such that, when liquid is drawn into the receiving region, the gas region between the receiving region and the pump that does not contain liquid is saturated with vapour from the liquid being sampled.

A corresponding method is also provided.

## Description

This invention relates to the sampling and dispensing of liquids.

There are many areas of technology in which it is necessary to be able to sample and dispense liquid to and from one or more vessels. In many of these areas there has been, in recent times, a move toward the automated sampling and dispensing of such liquids in order to reduce the reliance on manual labour and also to ensure the safe handling of toxic and dangerous liquids. An example of such an area is that of chemical synthesis in the field of drug manufacture.

The common approach to liquid sampling/dispensing is to draw the liquid up into a retaining chamber, move the retaining chamber to the vessel of interest and then dispense the liquid from the chamber into the receiving vessel. With such a system the liquid is drawn up into the chamber by creating a reduced pressure in a pipe connected to the chamber and allowing atmospheric pressure to urge the liquid into the chamber. Once in the location of the receiving vessel the pressure in the pipe is increased to dispense a liquid.

One significant problem associated with such an approach, particularly when handling volatile liquids, is that the liquid has a tendency to drip from the chamber whilst being moved from one vessel to another. This can cause contamination in the overall system in which the liquid sampler/dispenser is used and can be dangerous if toxic chemicals are being handled.

An alternative approach has been to employ a liquid in the pump and pipe connected to the retaining chamber, so that there is a liquid/liquid interface when the liquid is drawn up in to the retaining chamber. Such an approach has problems, however, in that the liquid in the pipe and pump can contaminate the liquid being drawn into the chamber.

The present invention seeks to provide a solution to this problem.

According to the present invention there is provided an apparatus for sampling and dispensing a liquid, the apparatus comprising:
a liquid receiving region having a liquid receiving orifice;
a pump for controlling the gas pressure in the receiving region such that liquid can be drawn into the region and dispensed from the receiving region via the orifice; and
means for controlling the pump such that, when liquid is drawn into the receiving region any gas between the receiving region and the pump is saturated with vapour from the liquid being sampled.

A corresponding method is also provided.

The controlling means may operate by ensuring that liquid is drawn into the receiving region, immediately dispensed from the receiving region and then drawn back into the receiving region to ensure adequate vapour saturation.

By ensuring vapour saturation of the gas between the pump and the receiving region it can be assured that no further vaporisation of the liquid occurs during transport, hence preventing dribbling.

One example of the present invention will now be described with relation to the accompanying drawings, in which:
Fig. 1 is a side schematic cross-sectional view of an apparatus according to the present invention; and
Figs. 2A to 2G are schematic diagrams showing various stages in the operation of the apparatus of Fig. 1.

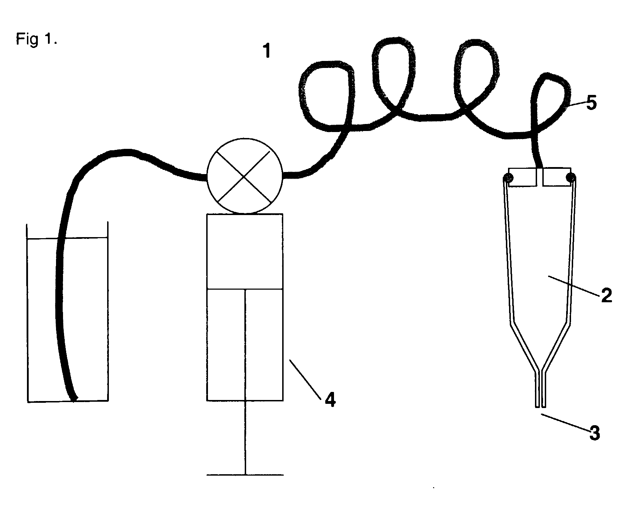

Referring to Fig. 1, an apparatus 1 according to the present invention has a receiving region 2 having an orifice 3. The receiving region 2 is connected to a pump 4 via a pipe 5. In most applications the pipe 5 and receiving region 2 will contain air and atmospheric pressure when the apparatus is idle. It will be appreciated, however, that a different (chemically inert) gas may be contained therein dependent upon the appropriate application.

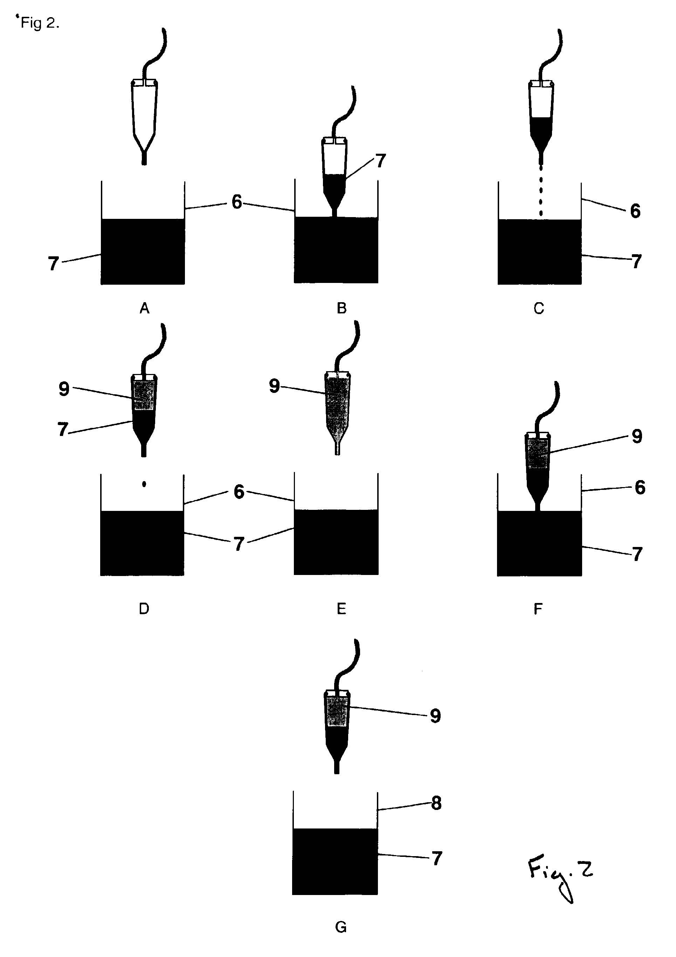

In use the receiving peg and orifice 3 are lowered into a vessel 6 containing a liquid 7 to be sampled (Fig. 2A). The pump 4 lowers the gas pressure in the pipe 5 and receiving region 2, with atmospheric pressure then urging the liquid 7 into the receiving region 2 (Fig. 2B). Liquid 7 drips from the receiving region 2 (Fig. 2C) until a saturated vapor region 9 is generated in the receiving region 2.

The pump then increases the gas pressure, ejecting the liquid 7 back into the vessel 6, leaving vapour 9 in the chamber (Fig. 2E). The pump 4 then reduces the pressure once more, with the liquid once more being urged into the receiving region 2 (Fig. 2F).

Because gas in the pipe 5 and receiving region 2 has already been in close contact with the liquid 7 it already has a saturated amount of liquid vapour 9 and contained therein when the liquid is urged into the receiving region 2 for the second time (Fig. 2F). The receiving region 2, together with any other movable portions of the apparatus 1, can then be moved to a second vessel 8, the pressure in the pipe 5 increased, and the liquid 7 dispensed into the second vessel 8 (Fig. 2G). The existence of a saturated vapour level 9 in the pipe 5 and region of the retaining region 2 which does not contain liquid 7 means that the volume of gas is maintained as a constant, and none of the liquid 7 drips out through the orifice 3 during movement of the apparatus 1.

## Claims

1. An apparatus for sampling and dispensing a liquid, the apparatus comprising:
a liquid receiving region having a liquid receiving orifice;
a pump for controlling the gas pressure in the receiving region such that liquid can be drawn into the receiving region and dispensed from the receiving region via the orifice; and
means for controlling the pump such that, when liquid is drawn into the receiving region any gas between the receiving region and the pump that does not contain liquid is saturated with vapour from the liquid being sampled.

2. An apparatus according to claim 1, wherein the controlling means apertures so that liquid is drawn into the receiving region, immediately dispensed from the receiving region and then drawn back into the receiving region to ensure adequate vapour saturation.

3. A method for sampling and dispensing a liquid, the method comprising the steps of:
generating liquid vapour saturation in any non-liquid containing portion of a receiving region;
moving the liquid into the receiving region; and
moving the receiving region to a second position and dispensing the liquid.

4. A method according to claim 3, wherein the liquid vapour saturation step further comprises the sub-steps of:
moving liquid into the receiving region and;
dispensing the liquid from the receiving region.
